# EUROPÄISCHE PATENTSCHRIFT

(11) **EP 0 884 506 B1**
(45) Veröffentlichungstag und Bekanntmachung des Hinweises auf die Patenterteilung: **23.07.2003**
(21) Anmeldenummer: 98108968.3
(22) Anmeldetag: 16.05.1998
(51) Int. Cl.: F16K 1/22, F16K 27/02

(54) **Armatur, insbesondere Regel- und Ansperrklappe**
Accoutrements, especially control and shutting flap
Raccorderie, notamment clapet de réglage et d'arrêt

(30) Priorität: 11.06.1997 DE 19724549
(43) Veröffentlichungstag der Anmeldung: 16.12.1998
(73) Patentinhaber: Xomox International GmbH & Co., 88131 Lindau (DE)
(72) Erfinder: Gonsior, Wolfgang, 88131 Bodolz (DE)
(74) Vertreter: Schmitt, Meinrad, Dipl.-Ing.

(56) Entgegenhaltungen:
- EP-A- 0 640 784
- DE-A- 19 508 789
- FR-A- 2 672 657

## Beschreibung

Die Erfindung bezieht sich auf eine Armatur, insbesondere Regel- und Absperrklappe, gemäß der im Oberbegriff des Patentanspruchs 1 angegebenen Merkmale.

Aus der EP-A-640 784 ist eine derartige Armatur bekannt, welche ein Außengehäuse mit einer Ausnehmung enthält, in welche ein Innengehäuse mit dem Absperrorgan eingesetzt ist. Das Innengehäuse enthält eine plane Anlagefläche, welche an einer gleichfalls planen Fläche in der Ausnehmung des Außengehäuses anliegt, wobei mittels eines Dichtringes die Abdichtung erfolgt. Diese beiden ebenen Anlageflächen sind orthogonal zur Längsachse bzw. zur Achse der Anschlussstutzen des Außengehäuses angeordnet. In der Ausnehmung ist ferner eine keilförmige Platte vorgesehen, deren zur Längsachse geneigte Anlagefläche an der entsprechend geneigt angeordneten Anlagefläche des Innengehäuses anliegt. Die Bearbeitung ebener keilförmig bzw. geneigt angeordneter Anlageflächen des Innengehäuses einerseits und der keilförmigen Platte andererseits erfordert einen erheblichen Aufwand, wobei in der Praxis unter Berücksichtigung von Fertigungstoleranzen eine passgenaue und letztendlich dichte Anlage nicht ohne weiteres möglich ist. Das Innengehäuse weist keine konische, also rotationssymmetrische Außenkontur auf, sondern eine im Prinzip trapezförmige Außenkontur mit planen Anlageflächen. Auch erfordert die keilförmige Platte einen zusätzlichen Fertigungsaufwand und Platzbedarf.

Ferner ist aus der FR-A-2 672 657 eine Armatur bekannt, deren Außengehäuse ebene Anlageflächen für gleichfalls ebene Anlageflächen des trapezförmig ausgebildeten Innengehäuses aufweist. Die Bearbeitung der keilförmig angeordneten Anlageflächen des Außengehäuses einerseits und die der entsprechend keilförmig angeordneten Anlageflächen des Innengehäuses andererseits erfordert einen beträchtlichen Aufwand, wobei insbesondere unter Berücksichtigung von Fertigungstoleranzen zur funktionssicheren Abdichtung Dichtungsringe in Ringnuten im Bereich der Anlagefläche des Innengehäuses erforderlich sind. Der Fachmann entnimmt keine Anregung zur konischen Ausbildung der Ausnehmung des Außengehäuses und zur korrespondierenden konischen Außenkontur des Innengehäuses.

Schließlich ist aus der DE-A-195 08 789 eine Absperrarmatur bekannt, welche als ein sogenannter Top Entry Kugelhahn ausgebildet ist. Das kugelförmig ausgebildete Absperrorgan ist an seiner Oberseite und / oder Unterseite derart abgeflacht, dass es durch eine Gehäuseöffnung in das Gehäuse einführbar ist. Nachfolgend wird das Absperrorgan um eine Achse in die Einbaulage gedreht, wobei die genannte Achse im wesentlichen orthogonal zu der Achse liegt, um welche das Absperrorgan in der Einbaulage zum Absperren und / oder Freigeben des durch eine angeschlossene Rohrleitung strömenden Mediums drehbar ist. Diese Ausbildung setzt ein zumindest näherungsweise kugelförmiges Absperrorgan voraus und ist bei Klappen, welche scheibenförmige Absperrorgane enthalten, oder bei Hähnen mit konischen Küken nicht ohne weiteres einsetzbar.

Hiervon ausgehend liegt der Erfindung die Aufgabe zugrunde, die Armatur der genannten Art dahingehend weiterzubilden, dass mit geringem Fertigungsaufwand eine funktionssichere Abdichtung zwischen Außengehäuse und Innengehäuse bei kompakter Bauweise erreicht wird.

Die Lösung dieser Aufgabe erfolgt gemäß der in Patentanspruch 1 angegebenen Merkmale.

Die erfindungsgemäße Armatur, welche insbesondere als Regel- und Absperrklappe ausgebildet ist, enthält ein äußeres Gehäuse und ein inneres Gehäuse mit den Funktions- und Verschleißteilen, wie Klappe, Sitz, Lager und dergleichen. Das Außengehäuse ist dicht und fest mit der Rohrleitung, vorzugsweise durch Schweißen, verbunden. Das Innengehäuse ist in eine konische Offnung bzw. Ausnehmung des äußeren Gehäuses eingesetzt und mit diesem gleichfalls dicht verbunden. Zwischen dem inneren und dem äußeren Gehäuse ist eine lösbare Verbindung vorgesehen, und mit Dichtungsmittel wird ein Austritt des Mediums aus der Armatur in den Außenraum unterbunden. Es wird eine hohe Dichtigkeit nach außen erreicht und im Vergleich mit vorbekannten Konstruktionen eine Reduzierung potentieller Leckstellen erzielt. Die Armatur gewährleistet aufgrund der konischen Ausbildung der Ausnehmung des Außengehäuses und der Ausbildung des Innengehäuses mit einer korrespondierenden konischen Außenkontur eine hohe Dichtigkeit. Die Armatur kann zweckmäßig auch als Doppelmantelversion ausgebildet sein, um insbesondere eine Beheizung oder Lecküberwachung zu ermöglichen. Bei der Montage der Armatur wird bevorzugt zunächst das Außengehäuse mit der Rohrleitung verbunden, wobei zweckmäßigerweise die Aufnahmeöffnung für das Innengehäuse mit einem Blinddeckel verschlossen werden kann. So kann vor dem Einbau des Innengehäuses mit dem Verschlußorgan und den Verschleißteilen die Rohrleitung Spülvorgängen unterzogen werden, wobei ersichtlich Beschädigungen, vor allem der Dichtteile, nicht eintreten können. Erst nach der kompletten Montage der Rohrleitung wird das Innengehäuse in das Außengehäuse eingesetzt und mit diesem verbunden. Es erfolgt somit eine zeitlich versetzte Bereitstellung des Außengehäuses einerseits und des Innengehäuses mit den Funktions- und Verschleißteilen.

Weiterbildungen und besondere Ausgestaltungen der Erfindung sind in den Unteransprüchen sowie in der weiteren Beschreibung angegeben.

Die Erfindung wird nachfolgend anhand der in der Zeichnung dargestellten besonderen Ausführungsbeispiele näher erläutert, ohne daß insoweit eine Beschränkung der Erfindung erfolgt. Es zeigen:
- Fig. 1: einen axialen Schnitt durch die als Regel- und Absperrklappe ausgebildete Armatur,
- Fig. 2: eine Ansicht von oben in Blickrichtung II gemäß Fig. 1,
- Fig. 3: eine Ansicht in Richtung III gemäß Fig. 1,
- Fig. 4: eine Ausführungsform, gemäß welcher die Abdichtung zwischen Innen- und Außengehäuse metallisch ausgeführt ist.

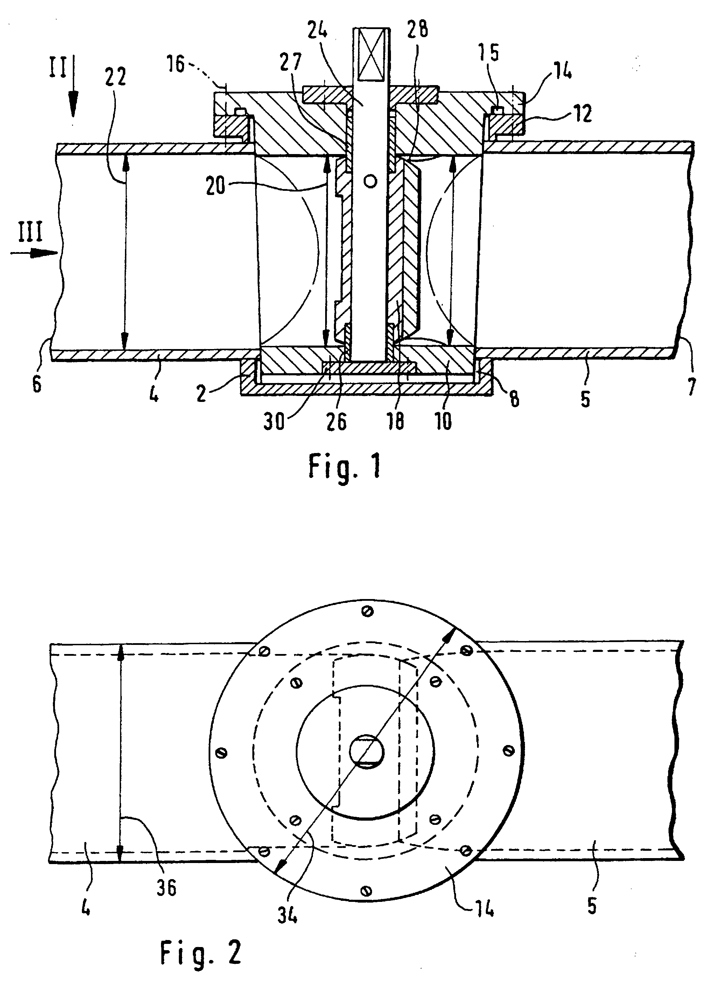

Fig. 1 zeigt in einem Längsschnitt eine Regel- und Absperrklappe mit einem Außengehäuse 2, welches Anschlußelemente zur Verbindung mit einer hier nicht weiter dargestellten Rohrleitung enthält. Die Anschlußelemente sind bei der dargestellten Ausführungsform als zwei Rohrstutzen 4, 5 ausgebildet, welche vorzugsweise über Schweißverbindungen mit dem Außengehäuse 1 fest verbunden sind. Alternativ können die Anschlußelemente auch als Flansche, Gewindeverbindungen oder dergleichen ausgebildet sein. Die freien Enden 6, 7 der Rohrstutzen sind in zweckmäßiger Weise zum Einschweißen in eine hier nicht weiter dargestellte Rohrleitung ausgebildet. Das Außengehäuse 2 enthält eine Ausnehmung 8, in welche ein Innengehäuse 10 einsetzbar ist. Das Außengehäuse 2 besitzt am oberen Ende der Ausnehmung bzw. deren Öffnung einen Flansch 12, welcher außen von einem korrespondierenden Flansch 14 des Innengehäuses übergriffen wird. Wie mit strichpunktierter Linie 16 angedeutet, ist so eine lösbare dichte Verbindung zwischen Außengehäuse 2 und Innengehäuse 10 geschaffen. Über das Außengehäuse 2 erfolgt die Verbindung mit der Rohrleitung, während das Innengehäuse 10 die Funktions- und Verschleißteile der Armatur enthält. Durch Lösen der Verbindung, insbesondere der Flanschverbindung 12, zwischen Außengehäuse 2 und Innengehäuse 10 kann letzteres ohne weitere Manipulationen an der Rohrleitung entfernt werden, so daß ein Austausch oder Servicearbeiten mit minimalem Aufwand durchführbar sind. Zur Abdichtung zwischen Innen- und Außengehäuse ist vorzugsweise zwischen den Flanschen 12, 14 eine Weichdichtung, aus PTFE, Graphite oder dergleichen vorgesehen. Hierfür enthält einer der Flansche, gemäß Zeichnung der Flansch 14, eine Kammer 15 zur Aufnahme einer derartigen Weichdichtung.

Das Innengehäuse 10 enthält das Absperrorgan 18, welches als Klappenscheibe ausgebildet ist. Dem Innengehäuse 10 mit dem Absperrorgan 18 liegen bestehende Konstruktionsprinzipien von Armaturen zugrunde, wobei es nicht darauf ankommt, ob das Absperrorgan als Klappenscheibe, Küken, Kugelkörper oder dergleichen ausgebildet ist. Die Ausnehmung 8 des Außengehäuses 2 ist in zweckmäßiger Weise konisch ausgebildet, und entsprechend konisch ausgebildet ist die zugeordnete Außenkontur des Innengehäuses 10. Somit ist das Innengehäuse 10 dicht in die konische Aufnahmeöffnung 8 unter weitgehender Vermeidung von Toträumen für das Strömungsmedium eingesetzt. Wie ersichtlich, ist in bevorzugter Weise die Aufnahmeöffnung 8 durchgehend über die gesamte Höhe konisch ausgebildet. Zusätzlich oder alternativ ist in zweckmäßiger Weise das Innengehäuse 10, abgesehen vom oberen Verbindungsflansch 15 über die gesamte Höhe konisch ausgebildet. Des weiteren ist vor allem zur Vermeidung von Toträumen der Innendurchmesser 20 des Innengehäuses 10 im wesentlichen gleich groß wie der Innendurchmesser 22 der Rohrstutzen 4, 5 des Außengehäuses.

Das Innengehäuse 10 enthält die Funktions- und Verschleißteile, wie vor allem die bereits erwähnte Klappenscheibe 18 und deren Welle 24 sowie deren Lager 26, 27. Ferner enthält das Innengehäuse 10 für das Absperrorgan bzw. die Klappenscheibe 18 den Sitz 28, welcher orthogonal zur Zeichenebene verläuft. Das untere Lager 26 der Welle 24 ist mit einem Lagerdeckel 30 versehen und abgeschlossen. Im Bereich der oberen Wellendurchführung sind in bekannter Weise Dichtmittel vorgesehen.

Fig. 2 zeigt eine Ansicht von oben, wobei der Flansch 14 des Innengehäuses gut zu erkennen ist. Der Flansch 14 besitzt einen Durchmesser 34 und ist nur unwesentlich größer als der Außendurchmesser 36 der Rohrstutzen 4, 5. Der Durchmesser 34 des Flansches 14 ist bevorzugt um einen vorgegebenen Faktor größer als der Außendurchmesser 36. Dieser Faktor liegt bevorzugt im Bereich zwischen 1,1 und 2,5, zweckmäßig zwischen 1,2 bis 2. Vorteilhaft hat sich der genannte Faktor in der Größe zwischen 1,3 bis 1,6 erwiesen. Erfindungsgemäß weist somit die vorgeschlagene Armatur einen kompakten Aufbau aus und erfordert einen geringen Einbau- und Platzbedarf.

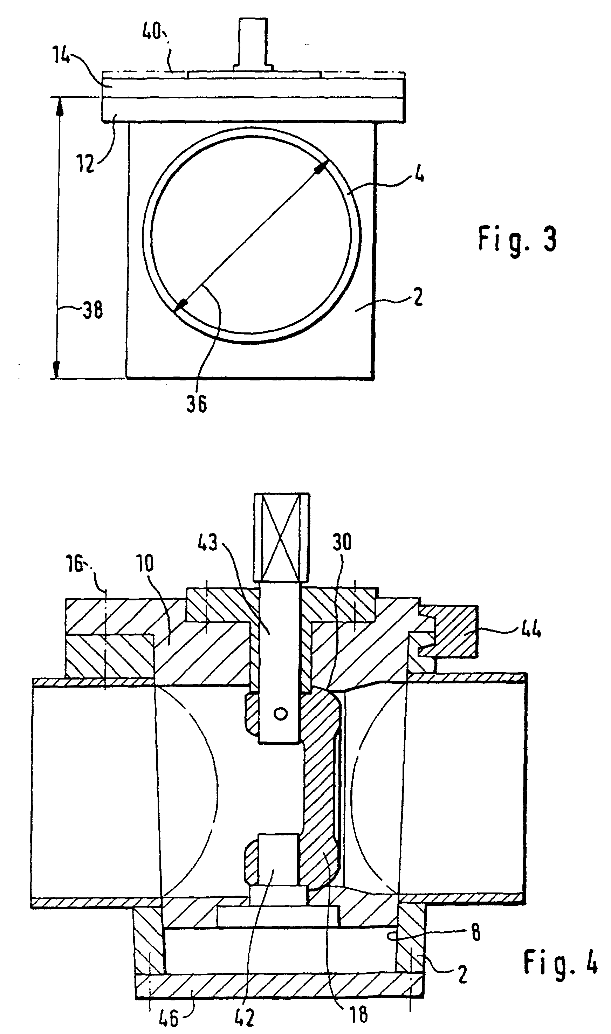

Fig. 3 zeigt die Armatur in einer axialen Ansicht mit dem Außengehäuse 2, welches eine im Prinzip rechteckförmige bzw. quadratische Außenkontur in zweckmäßiger Weise aufweist und gemäß Zeichnung oben den Flansch 12 besitzt. Das Außengehäuse 2 besitzt eine Höhe 38, welche nur unwesentlich größer ist als der Durchmesser 36 des Rohrstutzens 4. Die Höhe 38 des Außengehäuses 2 ist um einen Faktor im Bereich zwischen 1,1 bis 1,8, vorzugsweise zwischen 1,2 bis 1,6 größer als der Außendurchmesser 36 des Rohrstutzens 4. Wie ersichtlich, weist die erfindungsgemäße Armatur kompakte Abmessungen auf und steht gemäß Zeichnung weder unten noch oben im Verbindungsbereich, insbesondere der Flansche 12, 14, wesentlich über die Rohrstutzen und entsprechend die angeschlossenen Rohrleitungen vor.

Mit strichpunktierter Linie ist ein Blinddeckel 40 angedeutet. Dieser Blinddeckel 40 ist anstelle des Innengehäuses 10 bzw. dessen Flansches 14 mit dem Außengehäuse 2 verbindbar. Bevorzugt wird das Außengehäuse 2 zunächst ohne das Innengehäuse 10 mit der Rohrleitung verbunden, und bei Überprüfung der Rohrleitung mit Spülvorgängen oder ähnlichem werden das Innengehäuse und insbesondere dessen Funktions- und Verschleißteile nicht beaufschlagt. Erst nach Abschluß der Anlagenmontage und der Reinigung erfolgt im Rahmen der Erfindung der Einbau des Innengehäuses.

Fig. 4 zeigt eine weitere Ausgestaltung, bei welcher das Absperrorgan wiederum als Klappenscheibe 18 ausgebildet ist, welche aber einerseits unten mit einem Lagerzapfen 42 und oben mit einemDrehzapfen 43 im Innengehäuse 10 gelagert ist. Bei dieser Ausführungsform ist zwischen dem Außengehäuse 2 und dem Innengehäuse 10 eine metallische Abdichtung vorgesehen. Hierzu ist die konische Innenfläche der Ausnehmung 8, vorzugsweise zumindest im Bereich des oberen Endes, paßgenau auf die konische Außenfläche des Innengehäuses 10 abgestimmt. Die Verbindung des Innengehäuses 10 mit dem Außengehäuse 2 erfolgt bedarfsweise über Schraubverbindungen wie links mit der strichpunktierten Linie 16 angedeutet, oder über einen Spannring 44 wie rechts in der Zeichnung angedeutet. Am unteren Ende ist das Außengehäuse 2 mit einem Deckel 46 dicht verschlossen. Durch die offene Ausbildung des Außengehäuses 2 wird eine paßgenaue Bearbeitung der Innenfläche bzw. der konischen Ausnehmung 8 ohne besonderen Aufwand ermöglicht.

### Bezugszeichen

- 2: Außengehäuse
- 4, 5: Rohrstutzen
- 6, 7: freies Ende
- 8: Ausnehmung
- 10: Innengehäuse
- 12: Flansch von 2
- 14: Flansch von 10
- 15: Kammer in 14
- 16: Linie
- 18: Absperrorgan / Klappenscheibe
- 20: Innendurchmesser von 10
- 22: Innendurchmesser von 4, 5
- 24: Welle
- 26, 27: Lager
- 28: Sitz
- 30: Lagerdeckel
- 34: Durchmesser von 14
- 36: Außendurchmesser von 4, 5
- 38: Höhe von 2
- 40: Lagerdeckel
- 42: Lagerzapfen
- 43: Drehzapfen
- 44: Spannring
- 46: Bodendeckel

## Patentansprüche

1. Armatur, insbesondere Regel- und Absperrklappe, enthaltend ein Außengehäuse (2) mit Rohrstutzen (4, 5) zum Anschluss an eine Rohrleitung, und mit einer Ausnehmung (8) und ferner enthaltend ein Innengehäuse (10), welches in der Ausnehmung (8) angeordnet und lösbar mit dem Außengehäuse (2) verbunden ist und ein vorzugsweise um eine Achse schwenkbares Absperrorgan (18) enthält, wobei das Außengehäuse (2) und das Innengehäuse (10) miteinander lösbar verbindbare Flansche (12, 14) aufweisen, **dadurch gekennzeichnet, dass** die Ausnehmung (8) des Außengehäuses (2) konisch ausgebildet ist und das Innengehäuse (10) im wesentlichen in seiner gesamten Höhe eine korrespondierende konische Außenkontur aufweist und dass der Flansch (14) des Innengehäuses (10) einen Durchmesser (34) aufweist, welcher um einen vorgegebenen Faktor größer ist als der Außendurchmesser (36) der Rohrstutzen (4, 5).

2. Armatur nach Anspruch 1, **dadurch gekennzeichnet, dass** das Innengehäuse (10) einen dem Absperrorgan (18) zugeordneten Sitz (28) und die Lager (26, 27) des vorzugsweise als Klappenscheibe ausgebildeten Absperrorgans (18) aufweist.

3. Armatur nach Anspruch 1 oder 2, **dadurch gekennzeichnet, dass** die Rohrstutzen (4, 5) des Außengehäuses (2) an ihren freien Enden (6, 7) über Schweißverbindungen mit einer Rohrleitung verbindbar sind.

4. Armatur nach einem der Ansprüche 1 bis 3, **dadurch gekennzeichnet, dass** mit dem Außengehäuse (2) anstelle des Innengehäuses (10) ein Blinddeckel (40) verbindbar ist.

5. Armatur nach einem der Ansprüche 1 bis 4, **dadurch gekennzeichnet, dass** das Innengehäuse (10) einen Innendurchmesser (20) aufweist, welcher im wesentlichen gleich groß ist wie der Innendurchmesser (22) der Rohrstutzen (4, 5).

6. Armatur nach einem der Ansprüche 1 bis 5, **dadurch gekennzeichnet, dass** der Faktor, um welchen der Durchmesser (34) des Flansches (14) größer als der Außendurchmesser (36) der Rohrstutzen (4, 5) ist, im Bereich zwischen 1,1 bis 2,5, zweckmäßig im Bereich zwischen 1,2 bis 2 und insbesondere im Bereich zwischen 1,3 bis 1,6 liegt.

7. Armatur nach einem der Ansprüche 1 bis 6, **dadurch gekennzeichnet, dass** das Außengehäuse (2) eine Höhe (38) aufweist, welche um einen vorgegebenen Faktor größer ist als der Außendurchmesser (36) der Rohrstutzen (4, 5), wobei dieser Faktor vorzugsweise im Bereich zwischen 1,1 bis 1,8, insbesondere im Bereich zwischen 1,2 bis 1,6 liegt.

## Claims

1. Fitting, in particular control and shut-off valve, comprising an outer housing (2) with pipe sockets (4, 5) for connection to a pipeline and with a recess (8) and further comprising an inner housing (10) arranged in the recess (8), releasably joined to the outer housing (2) and comprising a shut-off device (18) preferably pivotable about an axis, the outer housing (2) and the inner housing (10) having flanges (12, 14) that can be releasably joined together, **characterised in that** the recess (8) in the outer housing (2) is conical and the inner housing (10) has a corresponding conical outer contour substantially over its entire height and that the flange (14) of the inner housing (10) has a diameter (34) which is larger than the outer diameter (36) of the pipe sockets (4, 5) by a predetermined factor.

2. Fitting according to claim 1, **characterised in that** the inner housing (10) has a seat (28) associated with the shut-off device (18) and the bearings (26, 27) of the shut-off device (18) preferably in the form of a flapper.

3. Fitting according to claim 1 or claim 2, **characterised in that** the pipe sockets (4, 5) of the outer housing (2) can be joined to a pipeline at their free ends (6, 7) by means of welded joints.

4. Fitting according to one of claims 1 to 3, **characterised in that** a cover plate (40) can be joined to the outer housing (2) instead of the inner housing (10).

5. Fitting according to one of claims 1 to 4, **characterised in that** the inner housing (10) has an inner diameter (20) which is substantially identical to the inner diameter (22) of the pipe sockets (4, 5).

6. Fitting according to one of claims 1 to 5, **characterised in that** the factor by which the diameter (34) of the flange (14) is larger than the outer diameter (36) of the pipe sockets (4, 5) is in the range between 1.1 and 2.5, advantageously in the range between 1.2 and 2 and, in particular, in the range between 1.3 and 1.6.

7. Fitting according to one of claims 1 to 6, **characterised in that** the outer housing (2) has a height (38) which is larger than the outer diameter (36) of the pipe sockets (4, 5) by a predetermined factor, this factor preferably being in the range between 1.1 and 1.8, in particular in the range between 1.2 and 1.6.

## Revendications

1. Accessoire de robinetterie, en particulier robinet de réglage et d'arrêt, comprenant un boîtier extérieur (2) avec des embouts tubulaires (4, 5) pour le branchement sur une conduite, et avec un évidement (8) et comprenant de plus un boîtier intérieur (10) qui est placé dans l'évidement (8) et est relié de manière amovible au boîtier extérieur (2) et qui contient un organe de fermeture (18) pouvant de préférence pivoter autour d'un axe, le boîtier extérieur (2) et le boîtier intérieur (10) présentant des brides (12, 14) pouvant être reliées de manière amovible, ***caractérisé en ce que*** l'évidement (8) du boîtier extérieur (2) est de conformation conique et le boîtier intérieur (10) présente pour l'essentiel sur toute sa hauteur un contour extérieur conique correspondant, ***et en ce que*** la bride (14) du boîtier intérieur (10) présente un diamètre (34) qui est supérieur d'un facteur prédéterminé au diamètre extérieur (36) des embouts tubulaires (4, 5).

2. Accessoire de robinetterie selon la revendication 1, ***caractérisé en ce que*** le boîtier intérieur (10) présente un siège (28) associé à l'organe de fermeture (18) et les paliers (26, 27) de l'organe de fermeture (18) conformé de préférence en disque de robinet.

3. Accessoire de robinetterie selon la revendication 1 ou 2, ***caractérisé en ce que*** les embouts tubulaires (4, 5) du boîtier extérieur (2) peuvent être reliés à une conduite au niveau de leurs extrémités libres (6, 7) par l'intermédiaire d'assemblages soudés.

4. Accessoire de robinetterie selon l'une quelconque des revendications 1 à 3, ***caractérisé en ce qu*'**au lieu du boîtier intérieur (10), un couvercle aveugle (40) peut être relié au boîtier extérieur (2).

5. Accessoire de robinetterie selon l'une quelconque des revendications 1 à 4, ***caractérisé en ce que*** le boîtier intérieur (10) présente un diamètre intérieur (20) qui est aussi grand que le diamètre intérieur (22) des embouts tubulaires (4, 5).

6. Accessoire de robinetterie selon l'une quelconque des revendications 1 à 5, ***caractérisé en ce que*** le facteur duquel le diamètre (34) de la bride (14) est supérieur au diamètre extérieur (36) des embouts tubulaires (4, 5) est compris entre 1,1 et 2,5, de préférence entre 1,2 et 2 et en particulier entre 1,3 et 1,6.

7. Accessoire de robinetterie selon l'une quelconque des revendications 1 à 6, ***caractérisé en ce que*** le boîtier extérieur (2) présente une hauteur (38) qui est plus grande d'un facteur prédéterminé que le diamètre extérieur (36) des embouts tubulaires (4, 5), ce facteur étant compris de préférence entre 1,1 et 1,8, en particulier entre 1,2 et 1,6.
